# EUROPÄISCHE PATENTSCHRIFT

(11) **EP 3 327 627 B1**
(45) Veröffentlichungstag und Bekanntmachung des Hinweises auf die Patenterteilung: **17.08.2022**
(21) Anmeldenummer: 17202722.9
(22) Anmeldetag: 21.11.2017
(51) Int. Cl.: G06V 10/25

(54) **VERFAHREN, VORRICHTUNG UND COMPUTERPROGRAMM ZUR VISUELLEN QUALITÄTSKONTROLLE VON TEXTILIEN**
METHOD, APPARATUS AND COMPUTER PROGRAM FOR VISUAL QUALITY CONTROL OF TEXTILES
PROCÉDÉ, DISPOSITIF ET PROGRAMME INFORMATIQUE PERMETTANT LE CONTRÔLE DE QUALITÉ VISUEL DE TEXTILES

(30) Priorität: 26.11.2016 DE 102016014123
(43) Veröffentlichungstag der Anmeldung: 30.05.2018
(73) Patentinhaber: MEWA Textil-Service AG & Co. Management OHG, 65189 Wiesbaden (DE); Fraunhofer-Gesellschaft zur Förderung der angewandten Forschung e.V., 80686 München (DE)
(72) Erfinder: Siegmund, Dirk, 64263 Darmstadt (DE); Schmidt, Uwe, Dipl.-Ing., 36282 Hauneck (DE)
(74) Vertreter: Weilnau, Carsten

(56) Entgegenhaltungen:
- DD-A5- 298 158
- DE-U1-202007 002 298
- U.S. Ragupathy ET AL: "Fault Identification and Classification in Textile Web Materials using Particle Analyzer", , 29. April 2013 (2013-04-29), XP055461292, Gefunden im Internet: URL:https://pdfs.semanticscholar.org/82ab/ 0b14734874d8c3c659c6aeaeaaad2c36ce72.pdf [gefunden am 2018-03-20]
- MOSBERGER RAFAEL ET AL: "Multi-human tracking using high-visibility clothing for industrial safety", 2013 IEEE/RSJ INTERNATIONAL CONFERENCE ON INTELLIGENT ROBOTS AND SYSTEMS, IEEE, 3. November 2013 (2013-11-03), Seiten 638-644, XP032537448, ISSN: 2153-0858, DOI: 10.1109/IROS.2013.6696418 [gefunden am 2013-12-26]
- NAVNEET KAUR ET AL: "Application of Machine Vision Techniques in Textile (Fabric) Quality Analysis", IOSR JOURNAL OF ENGINEERING, Bd. 02, Nr. 04, 1. April 2012 (2012-04-01) , Seiten 582-584, XP055460739, ISSN: 2278-8719, DOI: 10.9790/3021-0204582584
- ABOUELELA A ET AL: "Automated vision system for localizing structural defects in textile fabrics", PATTERN RECOGNITION LETTERS, ELSEVIER, AMSTERDAM, NL, Bd. 26, Nr. 10, 15. Juli 2005 (2005-07-15) , Seiten 1435-1443, XP027779778, ISSN: 0167-8655 [gefunden am 2005-07-15]
- BAHLMANN C ET AL: "Artificial neural networks for automated quality control of textile seams", PATTERN RECOGNITION, ELSEVIER, GB, Bd. 32, Nr. 6, 1. Juni 1999 (1999-06-01), Seiten 1049-1060, XP004164755, ISSN: 0031-3203, DOI: 10.1016/S0031-3203(98)00128-9
- ALEX M. MUMZHIU: "Application of vision systems for color and appearance measurements in industrial inspection", PROCEEDINGS OPTICAL DIAGNOSTICS OF LIVING CELLS II, Bd. 3652, 8. März 1999 (1999-03-08), Seiten 102-109, XP055461511, US ISSN: 0277-786X, DOI: 10.1117/12.341129 ISBN: 978-1-5106-1324-9
- DORIAN SCHNEIDER ET AL: "A vision based system for high precision online fabric defect detection", INDUSTRIAL ELECTRONICS AND APPLICATIONS (ICIEA), 2012 7TH IEEE CONFERENCE ON, IEEE, 18 July 2012 (2012-07-18), pages 1494-1499, XP032268625, DOI: 10.1109/ICIEA.2012.6360960 ISBN: 978-1-4577-2118-2

## Beschreibung

Die vorliegende Erfindung betrifft ein Verfahren, eine Vorrichtung sowie ein Computerprogramm zur visuellen Qualitätskontrolle von Textilien, insbesondere von Warnschutztextilien oder Warnschutzkleidung.

### Hintergrund

Die Reinigung und Instandsetzung von Berufsbekleidung findet vornehmlich in spezialisierten Großwäschereien statt, die z.B. von einem Dienstleister betrieben werden. Die in der Wäscherei angelieferte Kleidung wird vor einem Waschvorgang registriert. Nach einem erfolgten Waschvorgang und einer Kontrolle der Kleidung wird diese vor Auslieferung aus der Wäscherei einer optionalen Instandsetzung unterzogen. Schutzkleidung, wie sie typischerweise im Straßenverkehr, so zum Beispiel auf Baustellen oder anderweitigen Außenarbeiten eingesetzt wird, weist neben einer besonders gut wahrnehmbaren Warnfarbe zumeist auch einzelne Reflektorbereiche oder Reflexionsstreifen auf. Stark strapazierte Berufsbekleidung, insbesondere Warnschutzkleidung kann einem vergleichsweise hohen Verschleiß unterliegen. Ferner kann die Leuchtkraft oder das Reflexionsvermögen der Warnschutzkleidung nach einer Vielzahl von Tragezyklen oder Waschvorgängen allmählich nachlassen.

Bevor gewaschene und ggf. instandgesetzte Berufsbekleidung, insbesondere Schutzkleidung oder Warnschutzkleidung die Wäscherei verlässt, ist diese einer Qualitätskontrolle zu unterziehen. Kleidung, die nach dem Waschen festgelegte Kriterien zur Einhaltung ihrer Funktionstüchtigkeit nicht mehr oder nur noch bedingt erfüllt, ist zu identifizieren und ggf. durch neue Kleidung zu ersetzen. Für Warnschutzkleidung gilt es insbesondere, fest vorgegebene Kriterien, die die Funktionstüchtigkeit der Kleidung festlegen, einzuhalten. Solche Kriterien sind beispielsweise in den Normen EN 471 oder ISO 20471: 2013 in der zum Anmeldetag gültigen Fassung angegeben.

Die Qualitätskontrolle von Warnschutzkleidung oder Warnkleidung erfolgt in einer Großwäscherei nach wie vor durch geschultes Personal, welches die zu prüfende Warnkleidung einer Sichtprüfung unterzieht. Die Beurteilung einer Farbechtheit der Warnkleidung sowie die Funktionsfähigkeit von auf der Kleidung angebrachten Reflektoren erfolgt hierbei prozessbedingt vergleichsweise subjektiv.

Aus der DE 20 2007 002 298 U1 ist z.B. eine Vorrichtung zur automatischen Qualitätsbewertung von Warntextilien, bestehend aus einer Kontrollbox mit einer Anlagewand sowie mit einem Kamerasystem zum Aufnehmen einer Warntextilie bekannt, wobei das Kamerasystem mit einem Auswerterechner zur Auswertung der Reflexionsqualität von Farb- und/oder Reflexionsflächen der Warntextilie in Verbindung steht. In einer Kontrollposition wird die horizontal verschiebbare Anlegewand zum Warntextil hin bewegt. Das Warntextil wird dann von einem Kamerasystem aufgenommen. Die Anlegewand fährt dann in eine Ausgangsstellung zurück, mittels eines Drehmoduls wird das Warntextil um 180° gedreht, bevor die Anlegewand erneut an das Warntextil verfahren wird. Der Kontrollvorgang ist allein schon aufgrund des Erfordernisses des Wendens des Warntextils und aufgrund der Verfahrstrecke der Anlegewand verhältnismäßig zeitintensiv.

Demgegenüber liegt der vorliegenden Erfindung die Aufgabe zugrunde, ein verbessertes Verfahren zur visuellen Qualitätskontrolle von Textilien, insbesondere von Warntextilien bereitzustellen, welche einen vergleichsweise hohen Durchsatz oder eine vergleichsweise hohe Taktrate für die zu kontrollierenden Textilien bereitstellt, welches dementsprechend in einem teil- oder vollautomatisierten Wasch- und Instandsetzungsprozess für Textilien einbindbar ist, welches eine besonders zuverlässige, objektive und präzise Qualitätskontrolle der Textilien ermöglicht und welches mit vergleichsweise geringem apparativem Aufwand kostengünstig in die Praxis umsetzbar ist.

Es ist eine weitere Zielsetzung, zur Umsetzung des Verfahrens eine dementsprechend verbesserte Vorrichtung zur visuellen Qualitätskontrolle von Textilien sowie ein entsprechendes Computerprogramm für die visuelle Qualitätskontrolle von Textilien bereitzustellen.

Erfindung und vorteilhafte Ausgestaltungen ist durch die Ansprüche definiert.

Nach einem ersten Aspekt ist ein Verfahren zur visuellen Qualitätskontrolle von Warnschutzkleidung vorgesehen. Das Verfahren umfasst ein Aufnehmen zumindest eines Bildes eines Kleidungsstücks. Selektieren zumindest eines Teilbereichs des aufgenommenen Kleidungsstücks im Bild.Bewerten zumindest einiger Bildpunkte im selektierten Teilbereich und Bestimmen einer Bewertungsgröße der Bildpunkte auf Basis einer Helligkeit der Bildpunkte, wobei das Selektieren des zumindest einen Teilbereichs des aufgenommenen Kleidungsstücks anhand eines ersten Bildes des Kleidungsstücks erfolgt und wobei das Selektieren des zumindest einen Teilbereichs eine Kantenerkennung von Reflektoren des Kleidungsstücks umfasst, und wobei das Bewerten zumindest einiger Bildpunkte im selektierten Teilbereich anhand eines zweiten Bildes desselben Kleidungsstücks erfolgt, wobei das erste Bild und das zweite Bild im Wesentlichen deckungsgleich sind und sich im Hinblick auf Belichtungsdauer, Helligkeit, Intensität und/oder Kontrast voneinander unterscheiden, wobei das erste Bild hochbelichtet oder überbelichtet ist und wobei das zweite Bild normal belichtet oder unterbelichtet ist. Vergleichen der Bewertungsgröße mit einem vorgegebenen Schwellwert.

Die Bewertungsgröße ist typischerweise eine skalare Größe. Sie kann aber auch mehrere Variablen bzw. mehrere physikalische Bewertungsgrößen umfassen.

Die ermittelte Bewertungsgröße wird mit einem vorgegebenen Schwellwert verglichen. Es kann hierbei jede separat bestimmte Bewertungsgröße mit jeweils einem, typischerweise mit jeweils demselben Schwellwert verglichen werden. Optional kann für sämtliche bewerteten Bildpunkte zunächst eine gemittelte Bewertungsgröße gebildet werden, wobei dann die gemittelte Bewertungsgröße mit dem vorgegebenen Schwellwert verglichen wird. Liegt die Bewertungsgröße oder die gemittelte Bewertungsgröße unterhalb des Schwellwerts, so kann dies als Indiz dafür gewertet werden, dass das Textilobjekt nicht mehr die vorgegebenen Qualitätskriterien erfüllt. Ist die Bewertungsgröße oder die gemittelte Bewertungsgröße größer oder gleich dem vorgegebenen Schwellwert, so erfüllt das untersuchte Textilobjekt die vorgegebenen Qualitätskriterien. Das Textilobjekt kann dann zum Beispiel an einen Kunden ausgeliefert werden.

Liegt zumindest Bewertungsgröße oder die gemittelte Bewertungsgröße unterhalb des vorgegebenen Schwellwerts, so kann der Kunde zumindest darüber informiert werden, dass das fragliche Textilobjekt die vorgegebenen Qualitätskriterien nicht mehr erfüllt. Gegebenenfalls kann das betreffende Textilobjekt einer manuellen und von geschultem Fachpersonal durchzuführenden Qualitätskontrolle unterzogen werden. Es ist ferner denkbar und vorgesehen, das fragliche Textilobjekt mit einer gemittelten Bewertungsgröße unterhalb des vorgegebenen Schwellwerts auszusortieren und ggf. durch ein neuwertiges oder neues entsprechendes Textilobjekt zu substituieren.

Das hier vorgesehene Verfahren zeichnet sich insbesondere durch die Selektion eines Teilbereichs des aufgenommenen Textilobjekts und durch eine Bewertung des zuvor selektierten Teilbereichs des Textilobjekts aus. Auf diese Art und Weise kann eine Vielzahl unterschiedlicher Textilien, welche für unterschiedliche Einsatzzwecke oder für unterschiedliche Endanwender individualisiert sind, gleichermaßen ein und demselben Qualitätskontrollprozess unterzogen werden. Durch Selektion zumindest eines Teilbereichs auf Basis eines vorgegebenen Auswahlkriteriums können die für die Qualitätskontrolle irrelevanten Bereiche des Textilobjekts ausgeblendet werden.

Häufig weisen Textilobjekte im Bereich der Warnkleidung neben einer charakteristischen Warnfarbe und neben retroreflektierenden Leuchtstreifen individuelle Gestaltungsmerkmale in Form von Besatzstücken auf, die beispielsweise in grauer, schwarzer oder blauer Farbe gehalten sind. Ferner können die Textilobjekte kundenspezifisch individualisiert sein und dementsprechend zum Beispiel mit einem Firmenlogo versehen sein. Indem das Verfahren zumindest einen Teilbereich, nämlich einen für die Qualitätskontrolle relevanten Teilbereich selektiert, kann die nachfolgende Bewertung der Bildpunkte des aufgenommenen Bildes im selektieren Teilbereich eine qualitativ hochwertige, gut reproduzierbare und für eine Vielzahl unterschiedlichster Textilobjekte universell anwendbare Qualitätskontrolle bereitstellen. Der Personalaufwand für die visuelle Qualitäts- und/oder Funktionsprüfung der Textilobjekte kann reduziert werden. Kosten können hierdurch eingespart werden.

Nach einer weiteren Ausgestaltung des Verfahrens werden sämtliche Bildpunkte im selektiven Teilbereich bewertet. Je mehr Bildpunkte des selektierten Teilbereichs für die Bewertung und für die Bestimmung der Bewertungsgröße herangezogen, desto präziser kann z.B. die gemittelte Bewertungsgröße bestimmt werden. Lokale und punktuelle Abweichungen der Bewertungsgröße innerhalb des selektierten Teilbereichs können somit weitreichend kompensiert werden. Die Untersuchung sämtlicher Bildpunkte erfordert natürlich auch eine entsprechende Rechenleistung eines das Verfahren implementierenden elektronischen Bildauswertesystems. Es kann daher zur Verringerung der Rechenzeit und zur Verringerung an die Anforderungen an die für das Verfahren vorzusehenden Hardware auch vorgesehen werden, nicht sämtliche, sondern beispielsweise nur einige, so z.B. jeden zweiten oder jeden dritten Bildpunkt im selektierten Teilbereich zu bewerten.

Es kann ferner vorgesehen werden, dass nach einem Vergleich einzelner Bewertungsgrößen mit dem Schwellwert sämtliche hierdurch gebildeten Schwellwertvergleichswerte über die Fläche des selektierten Teilbereichs statistisch ausgewertet werden. Beispielsweise können die Schwellwertvergleichswerte miteinander in Bezug gesetzt werden oder es kann eine prozentuale Angabe berechnet werden, wieviele der ermittelten Bewertungsgrößen eines selektierten Teilbereichs unterhalb des Schwellwerts oder oberhalb des Schwellwerts liegen.

Nach einer weiteren Ausgestaltung des Verfahrens erfolgt das Selektieren des zumindest einen Teilbereichs des aufgenommenen Textilobjekts auf Basis zumindest einer vorgegebenen Farbe oder auf Basis eines vorgegebenen Farbraums. Warnkleidung weist typischerweise ein Textilmaterial auf, welches in einer vorgegebenen Warnfarbe, etwa gelb, orange oder grün gehalten ist. Indem die Selektion des zumindest einen Teilbereichs auf Basis zumindest einer vorgegebenen Farbe erfolgt, können andere Bereiche des aufgenommenen Textilobjekts für die nachfolgende Bewertung des selektierten Teilbereichs quasi vollständig ausgeblendet werden. Mittels einer Farbselektion können beispielsweise diejenigen Bereiche des Textilobjekts für die anschließende Bewertung von Bildpunkten herangezogen werden, die eine vorgegebene Farbe aufweisen oder die innerhalb eines vorgegebenen Farbraums liegen. Die Qualität der Bewertung kann auf diese Art und Weise verbessert werden.

Es ist hierbei ferner denkbar, dass die vorgegebene Farbe mittels einer gewichteten Farbanalyse des aufgenommenen Bildes erfolgt. Weist das Textilobjekt beispielsweise überwiegend eine orangene Grundfarbe auf und ist das Textilobjekt lediglich in einem verhältnismäßig kleinen Teilbereich mit einem andersfarbigen Besatz und/oder mit Reflektorstreifen versehen, so kann mittels einer gewichteten Farbanalyse eine orangene Farbe ausgewählt werden, die nachfolgend für die Selektion des zumindest einen Teilbereichs des aufgenommenen Textilobjekts verwendet wird.

Für die anschließende Bewertung der Bildpunkte des selektierten Teilbereichs werden somit ausschließlich diejenigen Bereiche des Textilobjekts ausgewählt, die im Wesentlichen die gleiche Farbe oder Farbgebung aufweisen.

Nach einer weiteren Ausgestaltung umfasst das Selektieren des zumindest einen Teilbereichs eine farbbasierte Bildfreistellung des aufgenommenen Bildes. Der englische Fachbegriff hierzu ist das sogenannte Chroma Keying. Je nach erwarteter oder zuvor bestimmter Grundfarbe des Textilobjekts werden die in der vorgegebenen Farbe gehaltenen Bereiche des aufgenommenen Bildes separiert. Andersfarbige Bereiche des aufgenommenen Textilobjekts, wie zum Beispiel Besatzstücke oder Reflektorstreifen werden somit nicht weiter betrachtet. Der typischerweise schwarze Hintergrund des Bildes wird ebenfalls mittels der farbbasierten Bildfreistellung entfernt. Anschließend kann das auf diese Art und Weise modifizierte Bild des Textilobjekts einer Bewertung auf Basis einiger oder sämtlicher Bildpunkte im selektierten Teilbereich des Bildes unterzogen werden. Das Selektieren eines Teilbereichs auf Basis der farbbasierten Bildfreistellung und/oder auf Basis einer vorgegebenen Farbe oder eines vorgegebenen Farbraums ist dazu vorgesehen, festzustellen, ob in inwieweit das Textilmaterial des Textilobjekts den Farbvorgaben, beispielsweise im Hinblick auf Farbwert, Sättigung und Helligkeit entspricht.

Nach einer weiteren Ausgestaltung des Verfahrens umfasst das Selektieren des zumindest einen Teilbereichs zumindest einen morphologischen Bildbearbeitungsschritt. Es ist hierbei insbesondere vorgesehen, morphologische Standardoperationen, wie zum Beispiel Erosion und Dilatation durchzuführen. Hierdurch ergeben sich morphologische Öffnungen und Schließungen von im Bild dargestellten Objekten oder Bereichen. Die Anwendung morphologischer Bildbearbeitungsschritte, etwa eines morphologischen Öffnens und/oder eines morphologischen Schließens kann dazu führen, weitere, außerhalb des eigentlichen Textilobjekts oder außerhalb des selektierten Teilbereichs liegende Bereiche des Bildes auszublenden und vom selektierten Teilbereich zu isolieren. Durch morphologische Operationen können zusätzliche Ränder und einzelne, nicht zum selektierten Teilbereich gehörende Bildpunkte bzw. Pixel aus dem aufgenommenen Bild entfernt werden. Dies verbessert wiederum die Qualität der Bewertung.

Nach einer weiteren Ausgestaltung umfasst das Selektieren des zumindest einen Teilbereichs zumindest eine Kantenerkennung des Teilbereichs und/oder eine Kantenerkennung des Außenumfangs des Textilobjekts. Mittels einer Kantenerkennung können einzelne Teilbereiche des aufgenommenen Bildes von anderen Teilbereichen separiert und hiervon selektiert werden. Eine helligkeitsbasierte oder farbbasierte Kantenerkennung kann auch in Kombination mit einer erkannten Erkennung des Außenumfangs des Textilobjekts vorgenommen werden. Somit können zum Beispiel auch die Außengrenzen von selektierten Teilbereichen des Textilobjekts ermittelt werden, die mit dem Außenumfang des Textilobjekts zusammenfallen. Mittels einer Kantenerkennung können ferner einzelne oder mehrere Masken bzw. Maskenbereiche definiert werden, die für die nachfolgende Bewertung der Bildpunkte Verwendung finden.

Nach einer weiteren Ausgestaltung ist ferner vorgesehen, dass das Selektieren des zumindest einen Teilbereichs des aufgenommenen Textilobjekts anhand eines ersten Bildes des Textilobjekts erfolgt und dass das Bewerten zumindest einiger Bildpunkte oder sämtlicher Bildpunkte im selektierten Teilbereich anhand eines zweiten Bildes desselben Textilobjekts erfolgt. Das erste und das zweite Bild sind hierbei im Wesentlichen deckungsgleich. Das erste und das zweite Bild desselben Textilobjekts unterscheiden sich voneinander, typischerweise im Hinblick auf Belichtungsdauer, Helligkeit, Intensität und/oder Kontrast.

Durch die Verwendung zumindest zweier Bilder können die jeweils für das Selektieren zumindest eines Teilbereichs und für das anschließende Bewerten des selektierten Teilbereichs optimierte Bilder oder Bildabschnitte bereitgestellt werden. Für das Selektieren eines Teilbereichs sind typischerweise hochbelichtete oder sogar überbelichtete Bilder von Vorteil, während für das Bewerten eines selektierten Teilbereichs normal belichtete oder eher unterbelichtete Bilder von Vorteil sind. Durch die Verwendung von zumindest eines ersten und eines zweiten Bildes des Textilobjekts können für das Selektieren eines Teilbereichs und für das anschließende Bewerten des selektierten Teilbereichs jeweils ideale Randbedingungen bereitgestellt werden.

Nach einer Weiterbildung werden das erste und das zweite Bild nacheinander aufgenommen. Es ist hierbei von Vorteil, wenn das zu bewertende Textilobjekt während der Aufnahme von erstem und zweitem Bild in Ruhe verweilt oder nur einer geringfügigen Bewegung unterliegt. Nach einer alternativen Ausführungsform kann das zweite Bild aber auch durch digitale Bildbearbeitung vom ersten Bild abgeleitet werden. Hierfür ist es insbesondere von Vorteil, wenn die Rohdaten eines zweidimensionalen Kamerasensors einem zur Durchführung des Verfahrens vorgesehenen elektrischen Bildauswertesystem zugeführt werden.

So kann vorgesehen sein, für zumindest erste oder einzige aufgenommene Bild des Textilobjekts die uninterpolierten Sensordaten eines Kamerasensors abzuspeichern. Die Rohdaten des Kamera- oder Bildsensors ermöglichen eine nachträgliche Bearbeitung des Bildes zur Bereitstellung eines zweiten Bildes. Das Abspeichern der Rohdaten des Bildsensors des ersten Bildes des Textilobjekts ermöglicht eine Belichtungskorrektur, eine Scharfzeichnung, eine Tonwertkorrektur, eine nachträgliche Änderung der Farbsättigung, einen Weißabgleich, eine Abgleichung der Gradationskurve zur Änderung der Bildkontraste, eine Korrektur der chromatischen Aberration durch Verschieben einzelner Farbkanäle sowie die Korrektur und Veränderung geometrischer Abbildungsfehler des Objektivs, beispielsweise der Korrektur einer tonnen- bzw. kissenförmigen Verzeichnung.

Auf Basis eines einzigen und in Rohdaten abgespeicherten Kamerabildes lässt sich quasi die Belichtung nachträglich so anpassen, dass aus den aufgenommenen Rohdaten letztlich zwei Bilder mit unterschiedlicher Helligkeit generiert werden können, wobei das hellere Bild typischerweise für das Selektieren zumindest eines Teilbereichs verwendet wird und wobei das dunkler belichtete Bild für die nachträgliche Bewertung der Bildpunkte im selektierten Teilbereich verwendet wird. Auch die Kantenerkennung des selektierten oder eines zu selektierenden Teilbereichs oder des Außenumfangs des Textilobjekts als auch die Kontur des Textilobjekts für eine farbbasierte Selektion eines Teilbereichs kann auf Basis eines zumeist intensiver belichteten Bildes erfolgen.

Nach einer weiteren Ausführungsform kann anstelle zweier Bilder eines ruhenden Textilobjekts auch eine Sequenz von Bildern eines bewegten Textilobjekts aufgenommen werden. Hierbei kann beispielsweise eine kurze Filmsequenz eines pendelnd gelagerten Textilobjekts generiert werden. Für einige Bilder oder für jedes Bild der so gewonnenen Bildersequenz kann ein Teilbereich des aufgenommenen Textilobjekts im Bild selektiert werden und es können zumindest einige oder sämtliche Bildpunkte im selektierten Teilbereich bewertet werden.

Dabei kann für einige oder für sämtliche Bildpunkte im selektierten Teilbereich eine Bewertungsgröße auf Basis zumindest eines vorgegebenen Bewertungskriteriums bestimmt werden. Die Bewertungsgröße selbst oder eine von sämtlichen Bewertungsgrößen ermittelte gemittelte Bewertungsgröße wird hierbei auf Basis sämtlicher bewerteten Bildpunkte einiger oder sämtlicher Bilder der Bildersequenz gebildet. Mit anderen Worten wird bei Vorliegen einer Bildersequenz für jedes Einzelbild eine Bewertung einzelner oder sämtlicher Bildpunkte in einem bildspezifisch selektierten Teilbereich vorgenommen.

Für die Bewertungsgröße oder für die gemittelte Bewertungsgröße werden dann die miteinander korrespondierenden selektierten Teilbereiche hinsichtlich ihrer Bewertungsgröße über sämtliche Bilder der Bildersequenz gemittelt. Hierdurch können etwaige Fehler kompensiert und beseitigt werden, die beispielsweise infolge einer Faltenbildung des Textilobjekts entstehen. Bei Aufnahme einer Bildersequenz eines bewegten Textilobjekts kann beispielsweise eine Falte des Textilobjekts nur in einigen Bildern der Bildersequenz auftreten. In den übrigen Bildern kann die Falte beispielsweise nicht vorhanden oder aus einem anderen Blickwinkel aufgenommen sein. Durch Mittelung der Bewertungsgrößen über einer Bildersequenz können derartige Fehler oder Fehlerquellen kompensiert oder zumindest teilweise beseitigt werden.

Sämtliche zuvor und in Bezug auf ein einzelnes Bild beschriebenen Verfahrens- und Bearbeitungsschritte sind gleichermaßen auf jedes oder zumindest auf einige ausgewählte Bilder der Bildersequenz analog anwendbar. Für jedes Bild der Bildersequenz können sämtliche Bildpunkte in einem selektierten Teilbereich bewertet werden. Das Selektieren des zumindest einen Teilbereichs kann auf Basis zumindest einer vorgegebenen Farbe oder eines vorgegebenen Farbraums erfolgen. Ferner kann zur Selektion des zumindest einen Teilbereichs für jedes Bild der Bildersequenz eine farbbasierte Bildfreistellung, etwa in Form von Chroma-Keying erfolgen. Auch können sämtliche oder zumindest einige Bilder der Bildersequenz morphologischen Bildbearbeitungsschritten unterzogen werden. Ebenso kann eine Kantenerkennung eines zu selektierenden Teilbereichs und/oder des Außenumfangs des Textilobjekts erfolgen.

Nach einem weiteren Aspekt folgt die Bewertung der Bildpunkte im selektierten Teilbereich auf Basis zumindest eines oder mehrerer der nachfolgenden Bewertungskriterien: Farbwert, Farbsättigung, Hellwert, relative Helligkeit, absolute Helligkeit, Lichtintensität, Reflexionsgrad. Es können hierbei mehrere Bewertungskriterien zusammen oder in Kombination zu weiteren sogenannten Meta-Bewertungskriterien zusammengesetzt werden. So ist beispielsweise denkbar, dass mehrere Bewertungen eines selektierten Teilbereichs im Hinblick auf unterschiedliche Bewertungskriterien zur Bestimmung entsprechender Bewertungsgrößen durchgeführt werden und dass für unterschiedliche, aus mehreren Bewertungen gebildete Bewertungsgrößen jeweils zu mehreren gemittelten Bewertungsgrößen gebildet und schließlich mit einer entsprechenden Anzahl von Schwellwerten verglichen werden.

Es ist insbesondere vorgesehen und denkbar, eine Farbbewertung des selektierten Teilbereichs durchzuführen und eine Bewertung des Reflexionsgrads des selektierten oder eines anderen selektierten Teilbereichs durchzuführen. Die Farbbewertung und die Reflexionsbewertung können hierbei vollkommen unabhängig voneinander ablaufen. Es kann für die visuelle Qualitätskontrolle vorgesehen sein, dass das zu untersuchende Textilobjekt sowohl eine Farbbewertung als auch eine Reflexionsbewertung bestehen muss und dass das Textilobjekt zum Passieren der Qualitätskontrolle eine Farbbewertungsgröße aufweisen muss, die größer oder gleich einem vorgegebenen Farbschwellwert ist und dass das untersuchte Textilobjekt eine Reflexionsbewertungsgröße aufweisen muss, die größer oder gleich einem vorgegebenen Reflexionsschwellwert ist.

Nach einer weiteren Ausgestaltung kann das Verfahren um eine Mustererkennung erweitert sein. So kann die visuelle Qualitätskontrolle mit einem Algorithmus zur Mustererkennung ausgestattet sein. Für die Mustererkennung können mehrere infrage kommende Muster etwas Farb- oder Reflexionsmuster in einem Speicher eines elektronischen Bildauswertesystem abgelegt sein. Die Mustererkennung kann sowohl für die Selektion des zumindest einen Teilbereichs des aufgenommenen Textilobjekts aber auch für die Bestimmung zumindest einer Bewertungsgröße herangezogen werden. Auch ist denkbar, dass die Mustererkennung Einfluss auf das Vergleichen einer Bewertungsgröße mit einem vorgegebenen Schwellwert hat.

So sind z.B. für reflektierende Bereiche, insbesondere für retroreflektierende Bereiche des Textilobjekts verschiedene vorgegebene geometrische Muster denkbar. So kann ein Reflektorstreifen z.B. mehrere nicht oder vermindert reflektierende dünne Streifen, Rauten oder dergleichen geometrische Muster bildende Strukturen aufweisen. Mit Vorsehen einer Mustererkennung kann z.B. die Bewertung der Bildpunkte in einem innerhalb des Musters liegenden selektierten Teilbereich musterspezifisch angepasst werden. Zu einem musterspezifischen Vergleich der Bewertungsgröße kann z.B. auch der jeweils relevante Schwellwert musterspezifisch angepasst, so z.B. angehoben oder abgesenkt werden. Für gemusterte, bzw. mit einem charakteristischen Muster versehene Teilbereiche des Textilobjekts kann die Bewertung insoweit verbessert werden.

Nach einem weiteren Aspekt betrifft die Erfindung eine Vorrichtung zur visuellen Qualitätskontrolle von Textilien. Die Vorrichtung weist eine Fördereinrichtung zum Transport einer Anzahl von Textilobjekten auf.

Die Vorrichtung ist ferner mit einer Vereinzelungseinrichtung zum zumindest zeitweisen Separieren eines Textilobjekts aus einer Anzahl von Textilobjekten versehen. Im Bereich der Vereinzelungseinrichtung ist zumindest eine erste Kamera angeordnet. Die Vorrichtung umfasst ferner ein elektronisches Bildauswertesystem, welches signalübertragend mit der zumindest ersten Kamera verbunden ist. Das elektronische Bildauswertesystem ist ferner zur Durchführung des zuvor beschriebenen Verfahrens ausgebildet. Mittels der Fördereinrichtung können die typischerweise bereits gewaschenen Textilobjekte einzeln nacheinander in den Abbildungsbereich der Kamera befördert werden.

Mittels der Vereinzelungseinrichtung können die zum Beispiel mittels Kleiderbügeln oder vergleichbaren Aufhängevorrichtungen an einer Förderstrecke aufgehängten Textilobjekte einzeln in einen Aufnahmebereich der Kamera verbracht werden. Auf diese Art und Weise wird sichergestellt, dass stets nur ein einziges Textilobjekt von der Kamera aufgenommen wird. Das elektronische Bildauswertesystem ist typischerweise rechnergestützt implementiert. Es weist typischerweise einen Computer mit einem Prozessor und mit einem Speicher auf, der über einen angeschlossenen Bildschirm die Ergebnisse der visuellen Qualitätskontrolle an einen Bediener ausgeben kann. Das elektronische Bildauswertesystem ist typischerweise mit Eingabeinstrumenten, beispielsweise mit einer Tastatur, einer Maus, einem Trackball oder mit einem Touchscreen versehen, sodass der Endanwender Einfluss auf die Qualitätskontrolle nehmen kann.

Das elektronische Bildauswertesystem kann ferner einen Speicher aufweisen, in welchem sämtliche Messergebnisse der Qualitätskontrolle oder Teile hiervon, so beispielsweise das aufgenommene Bild, ein komprimiertes aufgenommenes Bild sowie ermittelte selektierte Teilbereiche und Bewertungsgrößen abspeicherbar sind. Auf diese Art und Weise können die Qualitätsmerkmale des Textilobjekts nach jedem Waschgang abgespeichert werden. Dies ermöglicht eine präzise Analyse des zeitlichen Verlaufs des Verschleißes des Textilobjekts im Hinblick auf seine Farbgebung und im Hinblick auf zum Beispiel das Reflexionsvermögen von am Textilobjekt angebrachten Reflektoren. Zudem kann durch Abspeichern der Ergebnisse der Qualitätskontrolle hinreichend sichergestellt werden, dass das Textilobjekt in einem einwandfreien und funktionstüchtigen Zustand die Wäscherei verlassen hat.

Nach einer weiteren Ausgestaltung der Vorrichtung weist diese eine im Bereich der Vereinzelungseinrichtung angeordnete und mit dem elektronischen Bildauswertesystem signalübertragend verbundene zweite Kamera auf. Die zweite Kamera ist beabstandet zur ersten Kamera angeordnet. Die erste und die zweite Kamera befinden sich dabei auf gegenüberliegenden Seiten einer Aufnahmeposition des Textilobjekts. Die erste und die zweite Kamera sind aber jeweils zur Aufnahmeposition hin ausgerichtet. Die Aufnahmeposition ist typischerweise durch die Vereinzelungseinrichtung vorgegeben; oder umgekehrt.

In der Aufnahmeposition ist das Textilobjekt typischerweise mit einer Vorderseite der ersten Kamera zugewandt. Es ist typischerweise mit einer gegenüberliegenden Rückseite der zweiten Kamera zugewandt. Auf diese Art und Weise können mittels der ersten und mittels der zweiten Kamera die Vorderseite und die Rückseite des Textilobjekts quasi zeitgleich erfasst werden. Die Bildaufnahmen von erster und zweiter Kamera erfolgen typischerweise etwas zeitversetzt. Die Aufnahme des ersten als auch des zweiten Bildes erfolgt typischerweise mit Unterstützung einer künstlichen Lichtquelle, beispielsweise mittels eines Blitzlichtes. Wenn die erste und die zweite Kamera entgegengerichtet und aufeinander zu ausgerichtet sind, ist eine zeitlich versetzte Aufnahme mittels erster und zweiter Kamera zur Vermeidung einer Blendwirkung von Vorteil.

Nach einer weiteren Ausgestaltung ist zumindest eine der ersten und der zweiten Kameras in einer oder fluchtend zu einer Durchgangsöffnung einer Einhausung angeordnet. Die Vorrichtung weist insoweit eine Einhausung auf, die einen Bildhintergrund sowohl für das Bild der ersten Kamera als auch für das Bild der zweiten Kamera bereitstellt. Die Einhausung kann beispielsweise eine kubische, polygonale oder bogenförmig geschwungene Gestalt aufweisen. Die erste Kamera befindet sich typischerweise im Bereich eines ersten Seitenwandabschnitts und die zweite Kamera befindet sich typischerweise im Bereich eines gegenüberliegenden zweiten Seitenwandabschnitts der Einhausung. Der erste Seitenwandabschnitt und der zweite Seitenwandabschnitt können durchgehend über einen Deckenabschnitt miteinander verbunden sein. Auf diese Art und Weise kann ein weitgehend gleichbleibender homogener Hintergrund für die mittels der ersten und/oder der zweiten Kamera aufnehmbaren Bilder bereitgestellt werden.

Nach einer weiteren Ausgestaltung weist die Vorrichtung ferner zumindest eine Lichtquelle auf, welche zumindest die erste Kamera in einer Ebene senkrecht zur Ausrichtung der Kamera umschließt. Es können auch beide Kameras jeweils mit einer solchen Lichtquelle versehen sein. Die Ausrichtung der Kamera fällt hierbei mit der optischen Achse der Kamera zusammen. Bezogen auf die optische Achse erstreckt sich die Lichtquelle in einer transversalen Ebene rings um das Objektiv der Kamera. Die Lichtquelle kann als Flächenstrahler implementiert sein. Sie kann z.B. eine ringförmige Gestalt aufweisen in deren Mitte die Kamera angeordnet ist.

Nach einer weiteren Ausgestaltung weist die Fördereinrichtung eine Förderstrecke auf, die sich durch den Bereich der Vereinzelungseinrichtung erstreckt. Die Fördereinrichtung bzw. deren Förderstrecke weist im Bereich der Vereinzelungseinrichtung einen bogenartig gekrümmten Abschnitt auf. Der bogenartig gekrümmte Abschnitt kann beispielsweise U-förmig ausgebildet sein. Es ist aber auch denkbar, dass die Förderstrecke eine Art S-Bogen aufweist. Im Bereich der Vereinzelungseinrichtung erfährt das über die Förderstrecke transportierte Textilobjekt typischerweise eine Schwenkbewegung um 90°, sodass seitlich zur ursprünglichen Förderrichtung angeordnete erste und zweite Kameras das Textilobjekt von vorn und von hinten ablichten können.

Alternativ zu einem bogenartig gekrümmten Abschnitt ist ferner denkbar, dass die Textilobjekte entlang der Förderstrecke drehbar gelagert sind. Hierbei könnte die Förderstrecke beispielsweise vollständig geradlinig ausgestaltet sein. Die entlang der Förderstrecke zu transportierenden Textilobjekte wären lediglich an einer vorgegebenen Stelle anzuhalten und anschließend einzeln in die Aufnahmeposition zu bringen, in welcher sie typischerweise mittels der ersten und der zweiten Kamera von vorn und von hinten bildgebend erfasst werden. Da die Textilobjekte typischerweise mit ihrer Vorderseite oder mit ihrer Rückseite entlang der Förderstrecke ausgerichtet sind, wäre im Bereich der Aufnahmeposition bei einer hängenden und/oder aufrechten Anordnung der Textilobjekte lediglich eine Drehung um etwa 90° bezüglich ihrer Hochachse vorzunehmen. Eine entsprechende Drehung oder Schwenkbewegung kann entweder durch eine drehbare Lagerung der Textilobjekte an einer geradlinigen Förderstrecke oder durch einen bogenartig gekrümmten Verlauf der Förderstrecke im Bereich der Vereinzelungseinrichtung implementiert werden.

Nach einem weiteren Aspekt ist schließlich ein Computerprogramm zur visuellen Qualitätskontrolle von Textilien vorgesehen. Das Computerprogramm weist Programmcode auf, der von einem elektronischen Bildauswertesystem zur Durchführung des zuvor beschriebenen Verfahrens ausführbar ist. Das Computerprogramm weist insoweit Programmmittel zum Aufnehmen zumindest eines Bildes eines Textilobjekts sowie Programmmittel zum Selektieren zumindest eines Teilbereichs des aufgenommenen Textilobjekts im Bild auf der Basis zumindest eines vorgegebenen Auswahlkriteriums auf. Das Computerprogramm umfasst ferner Programmmittel zum Bewerten zumindest einiger Bildpunkte im selektierten Teilbereich und Programmmittel zum Bestimmen einer Bewertungsgröße der Bildpunkte auf Basis zumindest eines vorgegebenen Bewertungskriteriums.

Das Computerprogramm umfasst ferner Programmmittel zum Vergleichen der Bewertungsgröße mit einem vorgegebenen Schwellwert und/oder Programmmittel zum Vergleichen einer gemittelten Bewertungsgröße mit dem vorgegebenen Schwellwert. Zur Bildung der gemittelten Bewertungsgröße können gesonderte Programmmittel vorgesehen sein. Auch sind weitere optionale Programmmittel denkbar, welche die durch den Vergleich ermittelten Schwellwertvergleichsgrößen miteinander in Bezug oder in ein Verhältnis zur Fläche des ausgewählten Teilbereichs setzen.

Das Computerprogramm ist insbesondere zur rechner- oder computergestützten Durchführung des zuvor beschriebenen Verfahrens ausgestaltet. Sämtliche im Hinblick auf das Verfahren beschriebenen und genannten Merkmale, Vorteile und Wirkungen gelten gleichermaßen auch für das Computerprogramm; und umgekehrt. Gleiches gilt für die zuvor beschriebene Vorrichtung zur visuellen Qualitätskontrolle. Auch diese ist zur Durchführung des zuvor beschriebenen Verfahrens ausgelegt. Insoweit gelten auch hier sämtliche im Hinblick auf das Verfahren beschriebenen Merkmale, Vorteile und Wirkungen auch für die beschriebene Vorrichtung; und umgekehrt.

### Kurzbeschreibung der Figuren

Weitere Ziele, Merkmale und Vorteile des Verfahrens, der Vorrichtung und des Computerprogramms zur visuellen Qualitätskontrolle von Textilien werden in der nachfolgenden Beschreibung von Ausführungsbeispielen unter Bezugnahme auf die Zeichnungen erläutert. Hierbei zeigen:
Fig. 1 eine schematische perspektivische Darstellung der Vorrichtung zur visuellen Qualitätskontrolle,
Fig. 2 eine schematische Draufsicht auf die Vorrichtung gemäß Fig. 1,
Fig. 3 eine schematische Darstellung eines Beispiels eines zu untersuchenden Textilobjekts,
Fig. 4 eine Darstellung eines ersten aufgenommenen Bildes eines Textilobjekts,
Fig. 5 ein Negativ des Bildes gemäß Fig. 4,
Fig. 6 eine Darstellung eines zweiten Bildes desselben, bereits in Fig. 4 gezeigten Textilobjekts,
Fig. 7 die Darstellung eines Konturverlaufs des im Bild gemäß Fig. 4 gezeigten Textilobjekts,
Fig. 8 eine schematische Darstellung von Außenkonturen von am Textilobjekt angebrachten Reflektoren,
Fig. 9 das Ergebnis einer Bewertung des Reflexionsgrads der Reflektoren mit Angabe der Bewertungsgrößen,
Fig. 10 eine schematische Darstellung der Vorrichtung zur visuellen Qualitätskontrolle,
Fig. 11 ein Flussdiagramm des Verfahrens zur Durchführung der visuellen Qualitätskontrolle und
Fig. 12 ein weiteres Flussdiagramm des Verfahrens zur Durchführung der visuellen Qualitätskontrolle.

### Detaillierte Beschreibung

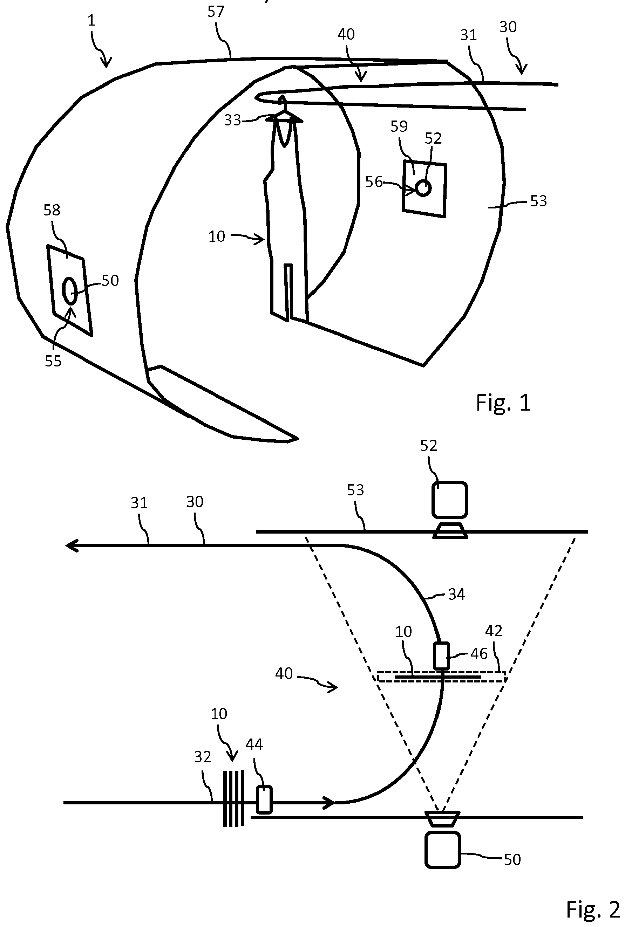

In den Fig. 1, 2 und 10 ist eine Vorrichtung 1 zur Durchführung einer visuellen Qualitätskontrolle von Textilien in unterschiedlichen Darstellungen und Ausführungsformen gezeigt. Die Vorrichtung 1 weist eine Fördereinrichtung 30 zum Transport einer Anzahl von Textilobjekten sowie eine Vereinzelungseinrichtung 40 zum zumindest zeitweisen Separieren eines Textilobjekts 10 aus der Anzahl von Textilobjekten auf. Im Bereich der Vereinzelungseinrichtung 40 ist zumindest eine erste Kamera 50 angeordnet, mittels welcher zumindest eine Vorder- oder Rückseite des Textilobjekts 10 in Form eines Bildes 100, 102 aufgenommen werden kann.

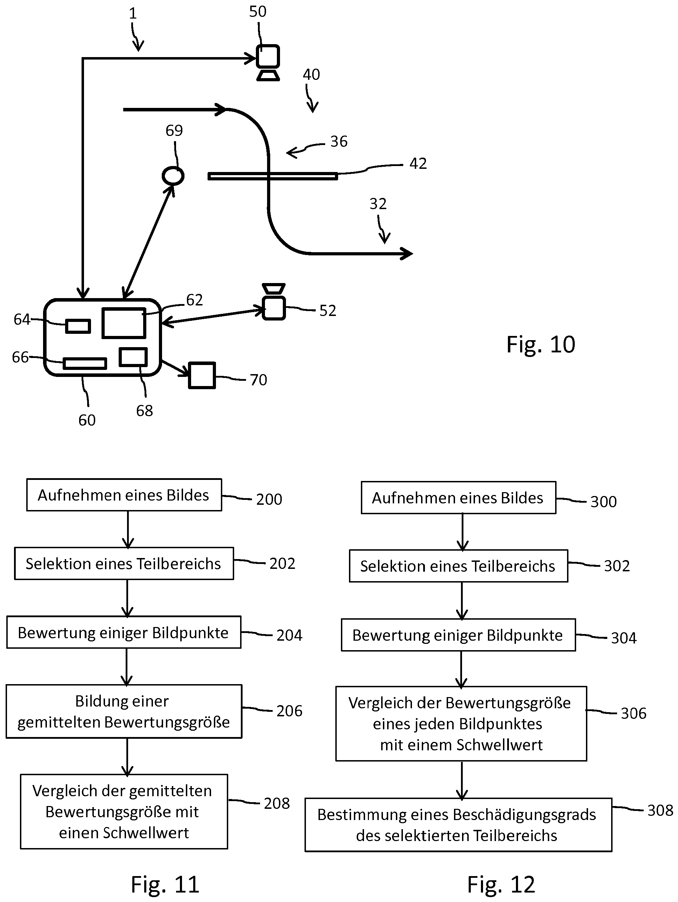

Die Vorrichtung 1 weist ferner ein elektronisches Bildauswertesystem 60 auf, welches signalübertragend mit der Kamera 50 verbunden ist und welches zur Durchführung eines Verfahrens zu visuellen Qualitätskontrolle von Textilien ausgestaltet ist. In bevorzugter Ausgestaltung weist die Fördereinrichtung 30 eine Schiene 31 auf, entlang welcher mehrere Textilobjekte 10 jeweils mittels eines Kleiderbügels 33 verschiebbar gelagert sind. Die Schiene 31 gibt eine Förderstrecke 32 vor. In Fig. 2 und in Fig. 10 sind Pfeile entlang der Förderstrecke 32 angedeutet, die die Förderrichtung der Textilobjekte 10 anzeigen.

Der Vereinzelungseinrichtung 40 bzw. der Kamera 50 vorgelagert befindet sich zumindest ein Stopper 44 im Bereich der Fördereinrichtung 30 oder im Bereich der Förderstrecke 32. Mittels des Stoppers 44 können die entlang der Förderstrecke 32 bewegten Textilobjekte 10 angehalten und anschließend einzeln in den Bereich einer Aufnahmeposition 42 verbracht werden. Im Bereich der Aufnahmeposition 42 kann ein weiterer Stopper 46 vorgesehen sein, mittels welchem das in den Bereich der Aufnahmeposition 42 verbrachte Textilobjekt 10 für die Bildaufnahme stationär fixierbar ist.

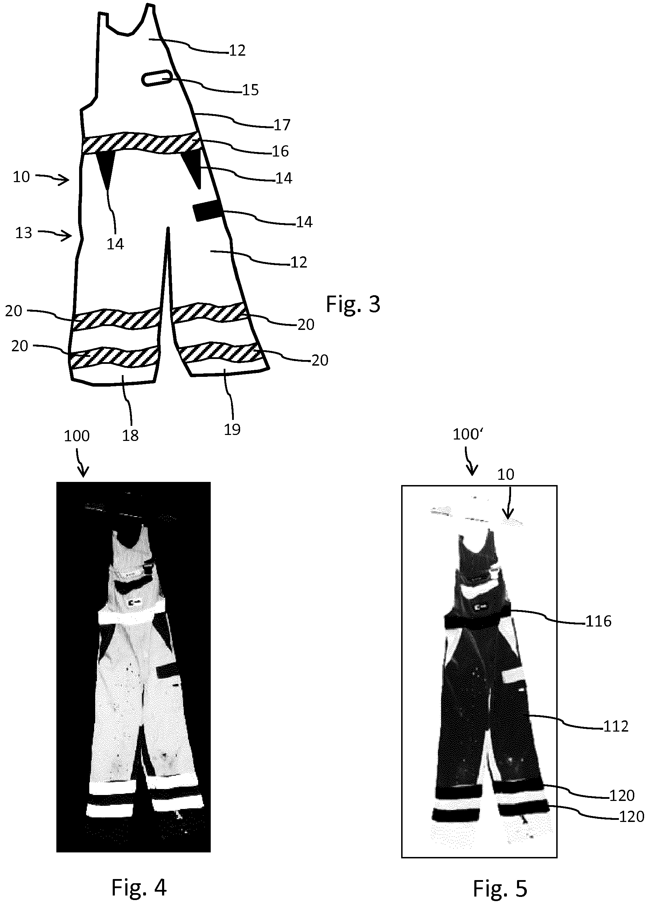

Sobald das Textilobjekt 10, beispielsweise eine in den Figuren 3 bis 9 gezeigten Latzhose 13, die Aufnahmeposition 42 erreicht hat, kann entweder automatisch oder unter Einwirkung eines Nutzers zumindest ein erstes Bild des Textilobjekts 10 mit Hilfe der ersten Kamera 50 aufgenommen werden. Wie in Fig. 2 und auch in Fig. 10 verdeutlicht, befindet sich das Textilobjekt 10 mit Erreichen der Aufnahmeposition 42 in einer gegenüber der ursprünglichen Ausrichtung vor dem Stopper 44 in einer in etwa um 90° gedrehten Ausrichtung. Diese Drehung des Textilobjekts 10 kann durch einen bogenförmigen Verlauf der Förderstrecke 32, mithin der Schiene 31 erreicht werden.

Im Ausführungsbeispiel gemäß der Fig. 2 weist die Förderstrecke 32 einen U-förmig bogenartig gekrümmten Abschnitt 34 auf. Im Ausführungsbeispiel der Fig. 10 ist ein S-bogenförmig gekrümmter Abschnitt 36 vorgesehen. Mittels des bogenartig gekrümmten Abschnitts 34, 36 kann jeweils ein einzelnes Textilobjekt 10 aus einer Menge von mehreren Textilobjekten in den Bereich der Aufnahmeposition 42 verbracht werden. In den Ausführungsformen gemäß der Fig. 1, 2 und 10 ist ferner eine zweite Kamera 52 vorgesehen, welche sich im Vergleich zur ersten Kamera 50 auf einer gegenüberliegenden Seite der Aufnahmeposition 42 befindet. Die Aufnahmeposition 42 kann sich typischerweise in etwa mittig zwischen der ersten Kamera 50 und der zweiten Kamera 52 befinden. Es ist hierbei vorgesehen, dass mittels der ersten und mittels der zweiten Kamera 50, 52 eine Vorderseite und eine Rückseite des Textilobjekts 10 quasi gleichzeitig, bzw. geringfügig zeitlich versetzt abgebildet werden können.

Wie ferner in Fig. 1 gezeigt, sind die Kameras 50, 52 entweder in einer die Fördereinrichtung 30 bereichsweise umgebenden Einhausung 54 integriert oder sie sind im Bereich einer Durchgangsöffnung 55, 56 einer Seitenwand oder eines Seitenwandabschnitts 51, 53 der Einhausung 54 angeordnet. Die Einhausung 54 kann sich in etwa tunnelartig oder kastenförmig um die Vereinzelungseinrichtung 40, insbesondere um die von der Vereinzelungseinrichtung 40 vorgegebene Aufnahmeposition 42 erstrecken. Es ist insbesondere vorgesehen, dass der erste Seitenwandabschnitt 51, in welchem sich die erste Kamera 50 befindet, einen Bildhintergrund für das Bild bildet, welches von der zweiten Kamera 52 aufgenommen werden kann. Umgekehrt bildet der zweite Seitenwandabschnitt 53, in welchem sich die zweite Kamera 52 befindet, einen Hintergrund für dasjenige Bild, welches mit der ersten Kamera 50 aufzeichenbar ist.

Wie in Fig. 1 ferner gezeigt, sind die Seitenwandabschnitte 51, 53 über einen Deckenabschnitt 57 durchgehend miteinander verbunden. Dies ist für die Bereitstellung eines vergleichsweise homogenen Hintergrunds des von den Kameras 50, 52 aufzunehmenden Bildes von Vorteil.

Für die Anordnung der Kameras 50, 52 sind in den Seitenwandabschnitten 51, 53 jeweils Durchgangsöffnungen 55, 56 vorgesehen. Innenseitig, das heißt der Aufnahmeposition 42 zugewandt, sind an den Seitenwandabschnitten 51, 53 jeweils Lichtquellen 58, 59 vorgesehen, welche die Vorderseite bzw. die Rückseite des Textilobjekts 10 für die Aufnahme des Bildes beleuchten. Die Lichtquellen 58, 59 können als Flächenstrahler implementiert sein, welcher sich rings um die Durchgangsöffnungen 55, 56 der Seitenwandabschnitte 51, 53 erstreckt. Die Lichtquellen 58, 59 können als LED-Lichtquellen, aber auch als Gasentladungslampen, beispielsweise als Xenon-Lichtquelle oder als Xenon-Blitzröhre ausgestattet sein.

Die jeweilige Lichtquelle 58, 59 grenzt typischerweise direkt an eine Durchgangsöffnung 55, 56 der Einhausung 54 und/oder an ein in der Öffnung platziertes Objektiv der Kamera 50, 52 an. Hierdurch können zwischen den von der Lichtquelle 58, 59 originär ausgehenden und vom Textilobjekt 10 reflektierten Lichtstrahlen besonders kleine Winkel, bevorzugt von weniger als 5°, weniger als 3°, weniger als 2° oder von weniger als 1° verwirklicht werden. Retroreflektierende Strukturen oder Bereiche des Textilobjekts können auf diese Art und Weise besonders gut visualisiert und untersucht werden. Die Lichtquellen 58, 59 können ferner eine Ringkontur oder Ringstruktur aufweisen mittels derer im Hinblick auf die in etwa mittig und im Zentrum der Lichtquelle 58, 59 liegende Kamera 50, 52 eine besonders homogene Ausleuchtung des Textilobjekts 10 realisierbar ist.

Nachdem das Textilobjekt 10 mittels der Fördereinrichtung 30 in die Aufnahmeposition 42 verbracht und dort möglichst bewegungsarm angehalten oder temporär fixiert wurde, können mittels der ersten und der zweiten Kamera 50, 52 jeweils getrennte Bilder 100 von der Vorder- und der Rückseite des Textilobjekts 10 aufgenommen werden. Auf Basis der aufgenommenen Bilder 100 erfolgt alsdann mit Hilfe des Bildauswertesystems 60 eine visuelle Qualitätskontrolle des Textilobjekts 10. Diese nimmt vergleichsweise wenig Zeit in Anspruch, sodass nach vollzogener Aufnahme das Textilobjekt 10 in Richtung der Förderstrecke 32 aus der Aufnahmeposition 42 heraus bewegt und ein weiteres Textilobjekt in den Bereich der Aufnahmeposition 42 verbracht werden kann.

Des Weiteren sind durch die bauliche Verbindung der Seitenwandabschnitte 51, 53 die Durchgangsöffnungen 55, 56 und damit auch die Positionen der Kameras 50, 52 zueinander fixiert.

Die Aufnahme eines oder mehrerer Bilder kann entweder durch einen Nutzer manuell getriggert werden. Es ist aber auch denkbar, dass das Bildauswertesystem 60 mit einem Sensor 69 gekoppelt ist, welcher dazu ausgestaltet ist, die Positionierung eines Textilobjekts den in der Aufnahmeposition 42 selbsttätig zu erkennen und den Prozess der Bildaufnahme quasi automatisch zu triggern. Der Sensor 69 kann ferner mit einem Bewegungssensor gekoppelt oder mit einem Bewegungssensor ausgestattet sein, der es ermöglicht, dass eine Bildaufnahme erst dann gestartet wird, wenn das beispielsweise pendelnd aufgehängte Textilobjekt 10 annähernd eine Ruheposition im Bereich der Aufnahmeposition 42 erreicht hat. Der Sensor 69 kann aber auch als Schalter implementiert sein, welcher beispielsweise mit der Fördereinrichtung 30 gekoppelt ist und welcher bei Ankunft eines Kleiderbügels 33 in der Aufnahmeposition aktivierbar ist.

Die Bildaufnahme kann dann beispielsweise automatisch nach einem vorgegebenen Offset initiiert und durchgeführt werden. Der zeitliche Offset kann dabei so gewählt sein, dass die Bildaufnahme zu einem Zeitpunkt erfolgt, bei welcher das Textilobjekt 10 nur noch vernachlässigbar kleinen Bewegungen unterliegt.

Das Bildauswertesystem 60 kann gemäß Fig. 10 einen Bildschirm 62 für die Ausgabe von Bewertungsgrößen oder von aufgenommenen Bildern aufweisen. Das Bildauswertesystem 60 ist typischerweise in Form eines Computers oder eines bildverarbeitenden Rechners implementiert. Das Bildauswertesystem 60 weist insoweit zumindest einen Prozessor 64 sowie einen Speicher 66 und zumindest ein Eingabeelement 68, beispielsweise in Form einer Tastatur, einer Computermaus, eines Trackballs oder eines Touchscreens auf. Neben einem integrierten Bildschirm 62 kann das Bildauswertesystem 60 auch mit einer externen Anzeigevorrichtung 70 gekoppelt sein.

Diese kann räumlich getrennt vom Bildauswertesystem 60 positioniert sein und zur Erzeugung eines visuellen, haptisch wahrnehmbaren oder akustischen Warnsignals ausgestaltet sein. Mittels der externen Anzeigeeinrichtung 70 kann die typischerweise vollautomatisch implementierbare Vorrichtung zur visuellen Qualitätskontrolle ein Warnsignal erzeugen, welches das Eingreifen eines Benutzers erforderlich macht. Alternativ kann die externe Anzeigeeinrichtung auch dazu verwendet werden, um auszusortierende Textilobjekte im fortlaufenden Prozess zu kennzeichnen.

In Fig. 3 ist ein typisches Textilobjekt 10 in Form einer Latzhose 13 gezeigt. Das Textilobjekt 10 weist neben einem Textilmaterial 12 diverse Besatzstücke 14, 15 sowie eine Anzahl an Reflektoren 16, 20 auf. Vorliegend ist ein horizontal ausgerichteter Reflektor 16 im Brust- bzw. Bauchbereich angeordnet. An den unteren Endabschnitten der beiden Hosenbeine 18, 19 sind ferner zwei in einem vorgegebenen Abstand zueinander angeordnete Reflektoren 20 angeordnet. In Fig. 3 ist ferner die umlaufende Außenkontur 17 des Textilobjekts 10 gezeigt.

Die Fig. 4 zeigt ein erstes vor einem schwarzen Hintergrund aufgenommenes Bild 100 des in Fig. 3 schematisch gezeigten Textilobjekts. Das Bild 100 gemäß Fig. 4 ist in Fig. 5 als Bild 100' invertiert, also als Negativ gezeigt. Dies dient lediglich der besseren Illustration der einzelnen Teilbereiche des aufgenommenen Textilobjekts. Für die Qualitätskontrolle des Textilobjekts 10 ist zunächst das Selektieren zumindest eines Teilbereichs 112, 116, 120 des aufgenommenen Textilobjekts vorgesehen. Der Teilbereich 112 im Bild 100' gemäß Fig. 5 stellt das dem Textilobjekt 10 zugrundeliegende Textilmaterial 12 dar. Dieses kann insbesondere bei Warnkleidung eine vorgegebene Farbe, beispielsweise gelb, rot, rotorange oder grün aufweisen.

Andere Teilbereiche 116, 120 des aufgenommenen Bildes 100 stellen die am Textilobjekt 10 angeordneten Reflektoren 16, 20 dar. Für die visuelle Qualitätskontrolle wird zumindest einer der hier genannten Teilbereiche 112, 116, 120 für eine Bewertung selektiert und dementsprechend für die Bewertung ausgewählt. Diejenigen Bildpunkte, die im selektierten Teilbereich 112, 116, 120 liegen, werden im Hinblick auf ein vorgegebenes Bewertungskriterium bewertet. Hierbei können beispielsweise der Farbwert, die Sättigung, die Helligkeit oder der Reflexionsgrad einzelner oder eines jeden Bildpunktes im selektierten Teilbereich 112, 116, 120 rechnergestützt bestimmt werden.

Für den selektierten Teilbereich 112, 116, 120 kann im Hinblick auf jede der infrage kommenden Bewertungsgrößen eine gemittelte Bewertungsgröße gebildet werden. Diese kann sich beispielsweise aus einem Mittelwert sämtlicher bewerteter Bildpunkte berechnet werden. Neben einem arithmetischen Mittelwert können auch quadratische Mittelwerte oder der Median sämtlicher bewerteter Bildpunkte bestimmt werden. Die gemittelte Bewertungsgröße ist ein Maß dafür, ob und inwieweit der selektierte Teilbereich ein vorgegebenes Qualitätskriterium erfüllt. Insoweit wird die gemittelte Bewertungsgröße mit einem vorgegebenen Schwellwert verglichen. Liegt die Bewertungsgröße unterhalb des vorgegebenen Schwellwerts, ist dies ein Indiz dafür, dass der selektierte Teilbereich und damit auch das gesamte Textilobjekt ein vorgegebenes Qualitätskriterium nicht erfüllt. Ist die gemittelte Bewertungsgröße größer oder gleich dem vorgegebenen Schwellwert, so kann davon ausgegangen werden, dass der selektierte Teilbereich, mithin das gesamte Textilobjekt das entsprechende Qualitätskriterium erfüllt.

Anstelle der Bildung einer gemittelten Bewertungsgröße ist ferner denkbar, die einzelnen ermittelten Bewertungsgrößen jeweils separate mit dem vorgegebenen Schwellwert zu vergleichen. Die hierdurch erzeugten Schwellwertvergleichswerte können dann statistisch ausgewertet werden. Beispielsweise kann eine Anzahl von Bewertungsgröße, die oberhalb oder unterhalb des vorgegebenen Schwellwerts liegen mit der Gesamtzahl der zu berücksichtigenden Bildpunkte eines selektierten Teilbereichs in Bezug gesetzt werden. Es kann z.B. einen prozentuale Angabe erzeugt werden, wieviele Bildpunkte oder wieviel Prozent der Bildpunkte eines selektierten Teilbereichs ein vorgegebenes Bewertungskriterium erfüllen.

Das Verfahren ist insbesondere für die visuelle und objektive Kontrolle der Farbe des Textilmaterials 12 als auch zur Kontrolle der Funktionsfähigkeit von Reflektoren 16, 20 vorgesehen.

Die Farbprüfung und Farbkontrolle des Textilmaterials 12 kann hierbei unabhängig und separat zur Prüfung der Reflektoren 16, 20 erfolgen. Die Farbprüfung kann beispielsweise direkt auf Basis des zum Beispiel in Fig. 4 wiedergegebenen Bildes 100 erfolgen. Die Farbprüfung umfasst typischerweise die Selektion derjenigen Teilbereiche des Textilobjekts 10, in welchen das Textilmaterial 12 sichtbar ist. Insoweit wird der Teilbereich 112 auf Basis des Bildes 100 bzw. 100' gemäß der Fig. 4 oder 5 selektiert und für die weitergehende Farbbewertung ausgewählt. Dies erfolgt typischerweise mittels einer farbbasierten Bildfreistellung, das heißt mittels Chroma Keying. Hierbei werden diejenigen Teilbereiche 112 des Textilobjekts 10, die eine vorgegebene Warnfarbe aufweisen, aus dem aufgenommenen Bild 100 separiert. Der andersfarbige Besatz 14, 15 als auch die Reflektoren 16, 20 werden mittels der farbbasierten Bildfreistellung quasi ausgeblendet und aus dem Bild 100 rechnerisch entfernt.

Optional werden noch ein oder mehrere morphologische Bildbearbeitungsschritte durchgeführt. Hierdurch können weitere, nicht zum Textilmaterial 12 gehörende Teile des Bildes 100 entfernt und die relevanten Bereiche, insbesondere der farbige Teilbereich 112 des Bildes 100 weiter isoliert werden. Durch morphologische Operationen, beispielsweise durch morphologisches Öffnen oder Schließen werden zusätzliche Ränder und einzeln, nicht zum Textilmaterial 12 gehörende Bildpunkte aus dem Bild 100 entfernt.

Für die Bewertung des selektierten Teilbereichs 112, insbesondere für die Farbanalyse wird das Bild zum Beispiel in einen vorgegebenen Farbraum, zum Beispiel in den HSV-Farbraum konvertiert. Die einzelnen Kanäle Farbwert (H HUE), Farbsättigung (S Saturation) und Hellwert (V Value) werden rechnerisch separiert. Jeder der den Farbraum bildenden Parameter, Farbwert, Sättigung und Helligkeit kann hierbei eine Bewertungsgröße darstellen. Für sämtliche Bildpunkte des selektierten Teilbereichs 112 werden die zum Farbraum gehörenden Werte ermittelt. Für jeden Bildpunkt werden die einzelnen zum Farbraum gehörenden Werte, nämlich Farbwert, Sättigung und Helligkeit über die Fläche des Teilbereichs 112 gemittelt. Hierdurch wird die gemittelte Bewertungsgröße, beispielsweise für den Farbwert, für die Sättigung oder für die Helligkeit bestimmt. Anschließend werden die gemittelten Bewertungsgrößen mit einem vorgegebenen Schwellwert verglichen.

Die Schwellwerte sind beispielsweise durch die eingangs genannten Normen vorgegeben. Es können aber noch weitaus striktere Schwellwerte für das vorliegende Verfahren verwendet werden. Auf diese Art und Weise kann sichergestellt werden, dass die gesetzlichen Grenzwerte auf jeden Fall eingehalten werden. Für die Prüfung der Funktionsfähigkeit der Reflektoren 16, 20 kann in ähnlicher Art und Weise vorgegangen werden. Die Selektion der mit Reflektoren 16, 20 versehenen Teilbereiche 116, 120 im aufgenommenen Bild erfolgt hierbei jedoch typischerweise über eine Kontur- oder Kantendetektion. Die Kontur- oder Kantendetektion derjenigen Teilbereiche 116, 120 des Bildes 100, welche den Reflektoren 16, 20 des Textilobjekts 10 entsprechen, kann beispielsweise auf Basis des ersten Bildes 100 erfolgen.

Das Bild 100 ist relativ stark belichtet. Wie in Fig. 4 und auch in Fig. 5 ersichtlich, sind dort die Teilbereiche 116, 120 der Reflektoren 16, 20 vollständig belichtet oder sogar überbelichtet. Etwaige Fehler oder Fehlstellen im Bereich der Reflektoren 16, 20 sind durch die verhältnismäßig starke Belichtung kaum auszumachen. Auf Basis des ersten Bildes 100 gemäß Fig. 4 kann jedoch eine Kantenerkennung sowohl der Außenkontur 17 als auch einer Kantenerkennung der Reflektoren 16, 20 erfolgen.

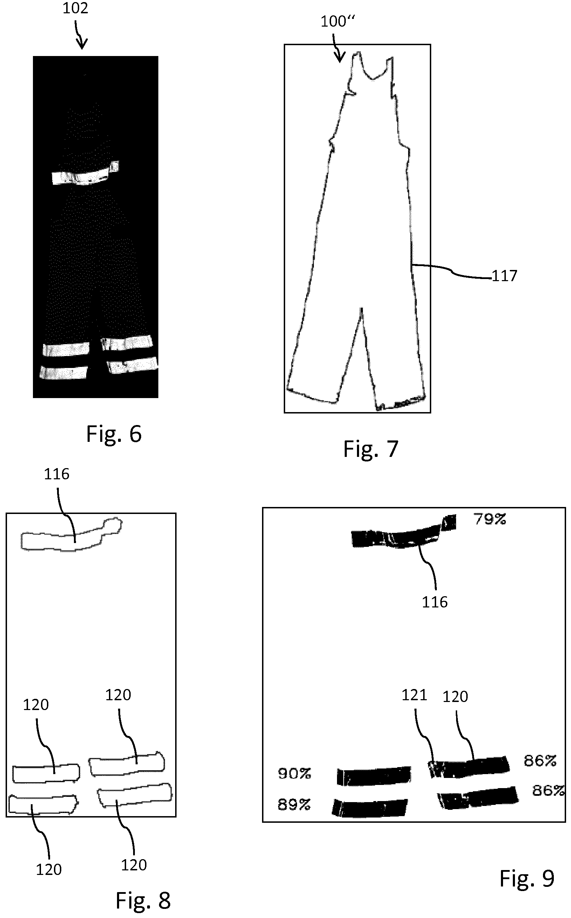

Die Außenkontur 117 des im Bild 100 erfassten Textilobjekts 10 ist im Bild 100" gemäß Fig. 7 gezeigt. Eine Kanten- oder Umrissliniendarstellung der den Reflektoren 16, 20 entsprechenden Teilbereiche 116, 120 ist in Fig. 8 schematisch gezeigt. Die Darstellung gemäß Fig. 8 bzw. die rechnerisch ermittelten Umrisslinien der Reflektoren 16, 20 stellen eine Maske dar, auf Basis derer die relevanten Teilbereiche 116, 120 in einem zweiten Bild 102 gemäß Fig. 6 identifizierbar sind.

Die Fig. 9 ist ein invertiertes Abbild der Fig. 6. Die Fig. 6 zeigt ein im Vergleich zur Fig. 4 schwächer belichtetes zweites Bild 102. Dieses kann durch eine weitere Aufnahme erzeugt werden oder aber auch rein rechnerisch aus dem Bild 100 gemäß Fig. 4 erzeugt werden. Umgekehrt ist auch denkbar, dass das Bild 100 rechnergestützt aus dem aufgenommenen Bild 102 erzeugt wird.

Wie insbesondere in den Fig. 6 und 9 ersichtlich, weisen die Reflektoren 16, 20 einige Fehlstellen bzw. einige Beschädigungen 121 auf, die einen geringeren Reflexionsgrad als angrenzende Bereiche der Reflektoren 16, 20 aufweisen. Die Helligkeitswerte in den selektierten Teilbereichen 116, 120 werden für jeden Bildpunkt einzeln bestimmt und mit einem vorgegebenen Schwellwert verglichen. Wie in Fig. 9 dargestellt, liegen 79 % der Bildpunkte im Teilbereich 116 oberhalb des vorgegebenen Schwellwerts. Im Bereich eines Hosenbeins 18 sind 90 und 89 % der Fläche des Reflektors 20 hinsichtlich ihres Reflexionsvermögens oberhalb des oberhalb des geforderten Schwellwerts. Die Reflektoren 20 des anderen Hosenbeins 19 liegen mit 86 % ihrer Fläche oberhalb des geforderten Schwellwerts.

Die prozentualen Angaben gemäß Fig. 9 bzw. das hier fehlende Komplement zu 100 % gibt den Beschädigungsgrad der jeweiligen Reflektoren 16, 20 an. Für die Bestimmung der Teilbereiche 116, 120 kann die Kantenerkennung bzw. die Bestimmung der Außenkontur 117 des Textilobjekts 10 von großem Vorteil sein. Wie z. B. anhand der Fig. 5 oder Fig. 4 ersichtlich, können links und rechts außen liegende Bereiche der Reflektoren 16, 20 bis an die Außenkontur 17 des Textilobjekts 10 heranragen und mit der Außenkontur 17 insoweit zusammenfallen.

Wäre der Reflektor 16, 20 angrenzend an die Außenkontur 17 stark beschädigt, könnte dies zu einem Fehler bei der Selektion der Teilbereiche 116, 120 und somit zu einer Verfälschung des Messergebnisses führen. Durch Einbeziehung der zum Beispiel mittels morphologischer Operationen aus dem Bild 100 gewonnenen Außenkontur 117 zur Bestimmung der zu selektierenden Teilbereiche 116, 120 kann die Qualität der Selektion der Teilbereiche 116, 120 und damit auch die Qualität des Messergebnisses gesteigert werden.

Der oder die Schwellwerte, mit welchen die ermittelten und/oder gemittelten Bewertungsgrößen zu vergleichen sind, können variabel, ggf. stufenlos eingestellt werden. Für womöglich variierende Aufnahmebedingungen und/oder für unterschiedlich geartete Textilobjekte kann die visuelle Qualitätskontrolle somit universell angepasst werden.

Der Schwellwert gibt denjenigen Grenzwert für einen betrachteten Bildpunkt des selektierten Teilbereichs 116, 120 an, unter welchem dieser Bildpunkt als beschädigt zu werten ist. Nachdem sämtliche Bildpunkte des selektierten Teilbereichs hinsichtlich einer möglichen Beschädigung bewertet wurden, wird anschließend das Verhältnis von beschädigten zu unbeschädigten Bildpunkten gebildet. Es wird folglich jeder Bildpunkt im selektierten Teilbereich 116, 120 im Hinblick auf das Bewertungskriterium Reflexionsgrad bewertet. Sämtliche bewerteten Bildpunkte und die hierdurch gewonnenen Bewertungsgrößen werden dann mit einem vorgegebenen Schwellwert verglichen. Es werden herbei Schwellwertvergleichswerte erzeugt, die angeben, ob ein Bildpunkt oberhalb oder unterhalb des Schwellwerts liegt, mithin ob das Bewertungskriterium Reflexionsgrad erfüllt ist oder nicht. Anschließend kann eine Anzahl derjenigen Bildpunkte eines selektierten Teilbereichs ermittelt werden, welche das Bewertungskriterium erfüllen. Diese Anzahl kann alsdann z.B. mit der Gesamtzahl der Bildpunkte des selektierten Teilbereichs in Relation gesetzt werden.

Mit dem gewählten Schwellwert wird also direkt Einfluss auf den resultierenden Beschädigungsgrad des Reflektors genommen und dessen Toleranz gegenüber dem Reflexionsgrad verändert. Dadurch dass einzelne Teilbereiche unabhängig voneinander selektiert werden können, kann jeder Reflektor 16, 20 unabhängig voneinander selektiert, bewertet und auf seine Beschädigung hin analysiert werden.

Das Flussdiagramm gemäß Fig. 11 verdeutlicht den Ablauf des Verfahrens zur visuellen Qualitätskontrolle von Textilien am Beispiel einer Farbprüfung. In einem ersten Schritt 200 wird ein Bild von einem Textilobjekt aufgenommen. In einem nachfolgenden Schritt 202 wird ein Teilbereich 112 des aufgenommenen Textilobjekts 10 im Bild auf der Basis zumindest eines vorgegebenen Auswahlkriteriums, typischerweise auf Basis einer vorgegebenen Warnfarbe selektiert. In einem nachfolgenden Schritt 204 werden zumindest einige Bildpunkte des selektierten Teilbereichs 112 im Hinblick auf ein Bewertungskriterium bewertet. Das aufgenommene Bild, insbesondere der selektierte Teilbereich 112 wird hierzu beispielsweise in den HSV-Farbraum konvertiert und die einzelnen Kanäle Farbwert, Sättigung und Helligkeit werden als Bewertungskriterium jeweils herangezogen.

Die für die Bildpunkte gemessenen Bewertungsgrößen, das heißt zum Beispiel Farbwert, Sättigung und Helligkeit werden für jeden Bildpunkt gespeichert. Im nachfolgenden Schritt 206 und nachdem sämtliche zu bewertenden Bildpunkte des selektierten Teilbereich 112 bewertet wurden, wird für jede Bewertungsgröße, so beispielsweise für den Farbwert, für die Sättigung und für die Helligkeit jeweils eine gemittelte Bewertungsgröße, das heißt ein über die Fläche des selektierten Teilbereichs 112 gemittelter Farbwert, eine über die Fläche gemittelte Sättigung und eine über die Fläche gemittelte Helligkeit bestimmt. In einem nachfolgenden Schritt 208 wird die gemittelte Bewertungsgröße mit einem vorgegebenen Schwellwert verglichen. Anhand des Schwellwertvergleichs wird schließlich bestimmt, ob das untersuchte Textilobjekt 10 die vorgegebenen Kriterien hinsichtlich maximal zulässiger Farbabweichung einhält.

Im Flussdiagramm gemäß Fig. 12 ist ein etwas anderer Ablauf des Verfahrens vorgesehen, welcher insbesondere für die Bestimmung der Funktionsfähigkeit von Reflektoren 16, 20 geeignet ist. Auch hier wird in einem ersten Schritt 300 zumindest ein Bild des Textilobjekts 10 aufgenommen. Im nachfolgenden Schritt 302 erfolgt eine Selektion eines einen Reflektor 16, 20 entsprechenden Teilbereichs 116, 120 des aufgenommenen Bildes 100. Im nachfolgenden Schritt 304 werden einige, bevorzugt sämtliche Bildpunkte des selektierten Teilbereichs 116, 120 bewertet. Dies kann optional auch mithilfe einer Mustererkennung erfolgen. Es wird folglich der Reflexionsgrad der Bildpunkt bei definierter Beleuchtung bestimmt. Im weiteren Schritt 306 werden dann die ermittelten Reflexionsgrade, mithin die Bewertungsgrößen jeweils mit einem vorgegebenen Schwellwert verglichen. Die mit dem Schwellwert verglichenen Bildpunkte werden entweder als intakt oder als beschädigt klassifiziert.

Dies wird entsprechend abgespeichert. In einem weiteren Schritt 308 wird dann ein Verhältnis von beschädigten Bildpunkten zu unbeschädigten Bildpunkten oder ein prozentualer Anteil beschädigter oder unbeschädigter Bildpunkte an der Gesamtanzahl der Bildpunkte des selektierten Teilbereichs 116, 120 ermittelt. Diese Berechnung kann beispielsweise in einer prozentualen Angabe münden, dass ein gewisser Prozentsatz der Fläche des selektierten Teilbereichs beschädigt ist, welche z.B. als Beschädigungsgrad zu bezeichnen ist.

In einem weiteren optionalen Schritt kann der ermittelte Beschädigungsgrad mit einem vorgegebenen maximal zulässigen Beschädigungsgrad, das heißt mit einem weiteren Schwellwert verglichen. Ergibt jener Vergleich, dass der Beschädigungsgrad oberhalb des maximal zulässigen Beschädigungsgrads liegt, wird das Textilobjekt aussortiert und sollte durch ein neuwertiges Textilobjekt 10 ersetzt werden.

### Bezugszeichenliste

- 1: Vorrichtung
- 10: Textilobjekt
- 12: Textilmaterial
- 13: Latzhose
- 14: Besatz
- 15: Besatz
- 16: Reflektor
- 17: Außenkontur
- 18: Hosenbein
- 19: Hosenbein
- 20: Reflektor
- 30: Fördereinrichtung
- 31: Schiene
- 32: Förderstrecke
- 33: Kleiderbügel
- 34: gekrümmter Abschnitt
- 36: gekrümmter Abschnitt
- 40: Vereinzelungseinrichtung
- 42: Aufnahmeposition
- 44: Stopper
- 46: Stopper
- 50: Kamera
- 51: Seitenwandabschnitt
- 52: Kamera
- 53: Seitenwandabschnitt
- 54: Einhausung
- 55: Durchgangsöffnung
- 56: Durchgangsöffnung
- 57: Deckenabschnitt
- 58: Lichtquelle
- 59: Lichtquelle
- 60: Bildauswertesystem
- 62: Bildschirm
- 64: Prozessor
- 66: Speicher
- 68: Eingabeeinrichtung
- 69: Sensor
- 70: Anzeigeeinrichtung
- 100: Bild
- 102: Bild
- 112: Teilbereich
- 116: Teilbereich
- 117: Außenkontor
- 120: Teilbereich
- 121: Beschädigung

## Patentansprüche

1. Verfahren zur visuellen Qualitätskontrolle von Warnschutzkleidung mittels eines elektronischen Bildauswertsystems (60) mit den Schritten:
- Aufnehmen zumindest eines Bildes (100, 102) eines Kleidungsstücks (10),
- Selektieren zumindest eines Teilbereichs (112, 116, 120) des aufgenommenen Kleidungsstücks im Bild (100, 102)
- Bewerten zumindest einiger Bildpunkte im selektierten Teilbereich (112, 116, 120) und Bestimmen einer Bewertungsgröße der Bildpunkte auf Basis einer Helligkeit der Bildpunkte,
- wobei das Selektieren des zumindest einen Teilbereichs (112, 116, 120) des aufgenommenen Kleidungsstücks anhand eines ersten Bildes (100) des Kleidungsstücks (10) erfolgt und wobei das Selektieren des zumindest einen Teilbereichs (112, 116, 120) eine Kantenerkennung von Reflektoren (16, 20) des Kleidungsstücks (10) umfasst,
- und wobei das Bewerten zumindest einiger Bildpunkte im selektierten Teilbereich (112, 116, 120) anhand eines zweiten Bildes (102) desselben Kleidungsstücks (10) erfolgt,
- wobei das erste Bild (100) und das zweite Bild (102) im Wesentlichen deckungsgleich sind und sich im Hinblick auf Belichtungsdauer, Helligkeit, Intensität und/oder Kontrast voneinander unterscheiden,
- wobei das erste Bild (100) hochbelichtet oder überbelichtet ist und wobei das zweite Bild (102) normal belichtet oder unterbelichtet ist,
- Vergleichen der Bewertungsgröße mit einem vorgegebenen Schwellwert.

2. Verfahren nach Anspruch 1, wobei sämtliche Bildpunkte im selektierten Teilbereich (112, 116, 120) bewertet werden.

3. Verfahren nach einem der vorhergehenden Ansprüche, wobei das Selektieren des zumindest einen Teilbereichs (112, 116, 120) eine farbbasierte Bildfreistellung des aufgenommenen Bildes (100) umfasst.

4. Verfahren nach einem der vorhergehenden Ansprüche, wobei das erste und das zweite Bild (100, 102) nacheinander aufgenommen werden oder wobei das zweite Bild (102) durch digitale Bildbearbeitung vom ersten Bild (100) abgeleitet wird.

5. Verfahren nach einem der vorhergehenden Ansprüche, wobei eine Sequenz von Bildern (100, 102) eines bewegten Kleidungsstücks (10) aufgenommen wird und wobei für einige Bilder oder für jedes Bild (100, 102) der Bildersequenz:
a) ein Teilbereich (112, 116, 120) des aufgenommenen Kleidungsstücks im Bild (100, 102) selektiert wird,
b) zumindest einige oder sämtliche Bildpunkte im selektierten Teilbereich (112, 116, 120) bewertet werden wobei für einige oder sämtliche Bildpunkte im selektierten Teilbereich (112, 116, 120) eine Bewertungsgröße auf Basis der Helligkeit der Bildpunkte bestimmt wird
und wobei die Bewertungsgröße auf Basis sämtlicher bewerteten Bildpunkte einiger oder sämtlicher Bilder (100, 102) der Bildersequenz gebildet wird.

6. Vorrichtung zur visuellen Qualitätskontrolle von Warnschutzkleidung, mit
- einer Fördereinrichtung (30) zum Transport einer Anzahl von Kleidungsstücken (10),
- einer Vereinzelungseinrichtung (40) zum zumindest zeitweisen Separieren eines Kleidungsstücks (10) aus der Anzahl von Kleidungsstücken,
- zumindest einer ersten im Bereich der Vereinzelungseinrichtung (40) angeordneten Kamera (50, 52) und mit
- einem elektronischen Bildauswertesystem (60), welches signalübertragend mit der Kamera (50, 52) verbunden ist und welches zur Durchführung des Verfahrens nach einem der vorhergehenden Ansprüche ausgestaltet ist.

7. Vorrichtung nach Anspruch 6, ferner mit einer im Bereich der Vereinzelungseinrichtung (40) angeordneten und mit dem elektronischen Bildauswertesystem (60) signalübertragend verbundenen zweiten Kamera (52), welche beabstandet zu einer ersten Kamera (50) angeordnet ist und wobei die erste und die zweite Kamera (50, 52) auf gegenüberliegenden Seiten der Aufnahmeposition (42) angeordnet und jeweils zur Aufnahmeposition (42) hin ausgerichtet sind.

8. Vorrichtung nach Anspruch 6 oder 7, wobei zumindest eine der ersten und der zweiten Kamera (50, 52) in einer oder fluchtend zu einer Durchgangsöffnung (55, 56) einer Einhausung (54) angeordnet ist.

9. Vorrichtung nach einem der vorhergehenden Ansprüche 6 bis 8, wobei die Fördereinrichtung (30) eine Förderstrecke (32) aufweist, die sich durch den Bereich der Vereinzelungseinrichtung (40) erstreckt und welche im Bereich der Vereinzelungseinrichtung (40) einen bogenartig gekrümmten Abschnitt (34, 36) aufweist.

10. Computerprogramm zur visuellen Qualitätskontrolle von Textilien, welches Programmcode aufweist, der von einem elektronischen Bildauswertesystem (60) zur Durchführung des Verfahrens nach einem der vorhergehenden Ansprüche 1 bis 5 ausführbar ist.

## Claims

1. Method for visual quality control of high-visibility clothing by means of an electronic image evaluation system (60) comprising the following steps:
- recording at least one image (100, 102) of a garment (10),
- selecting at least one partial region (112, 116, 120) of the recorded garment in the image (100, 102),
- assessing at least some pixels in the selected partial region (112, 116, 120) and determining an assessment variable of the pixels on the basis of the brightness of the pixels,
- wherein selecting the at least one partial region (112, 116, 120) of the recorded garment is effected on the basis of a first image (100) of the garment (10) and wherein selecting the at least one partial region (112, 116, 120) comprises an edge recognition of reflectors (16, 20) of the garment (10),
- and wherein assessing at least some pixels in the selected partial region (112, 116, 120) is effected on the basis of a second image (102) of the same garment (10),
- wherein the first image (100) and the second image (102) are substantially congruent and differ from one another with regard to exposure duration, brightness, intensity and/or contrast,
- wherein the first image (100) is highly exposed or overexposed and wherein the second image (102) is normally exposed or underexposed,
- comparing the assessment variable with a predefined threshold value.

2. Method according to Claim 1, wherein all pixels in the selected partial region (112, 116, 120) are assessed.

3. Method according to either of the preceding claims, wherein selecting the at least one partial region (112, 116, 120) comprises chroma keying of the recorded image (100).

4. Method according to any of the preceding claims, wherein the first and second images (100, 102) are recorded successively or wherein the second image (102) is derived from the first image (100) by digital image processing.

5. Method according to any of the preceding claims, wherein a sequence of images (100, 102) of a moving garment (10) is recorded and wherein for some images or for each image (100, 102) of the image sequence:
a) a partial region (112, 116, 120) of the recorded garment in the image (100, 102) is selected,
b) at least some or all pixels in the selected partial region (112, 116, 120) are assessed, wherein for some or all pixels in the selected partial region (112, 116, 120) an assessment variable is determined on the basis of the brightness of the pixels
and wherein the assessment variable is formed on the basis of all assessed pixels of some or all images (100, 102) of the image sequence.

6. Apparatus for visual quality control of high-visibility clothing, comprising
- a conveying device (30) for transporting a number of garments (10),
- a separating device (40) for at least intermittently separating a garment (10) from the number of garments,
- at least one first camera (50, 52) arranged in the region of the separating device (40), and comprising
- an electronic image evaluation system (60) connected to the camera (50, 52) in a signal-transmitting manner and configured for carrying out the method according to any of the preceding claims.

7. Apparatus according to Claim 6, furthermore comprising a second camera (52) arranged in the region of the separating device (40) and connected to the electronic image evaluation system (60) in a signal-transmitting manner, said second camera being arranged at a distance from a first camera (50), and wherein the first and second cameras (50, 52) are arranged on opposite sides of the recording position (42) and are each oriented towards the recording position (42).

8. Apparatus according to Claim 6 or 7, wherein at least one of the first and second cameras (50, 52) is arranged in or flush with a through opening (55, 56) in an enclosure (54).

9. Apparatus according to any of the preceding Claims 6 to 8, wherein the conveying device (30) has a conveying path (32) which extends through the region of the separating device (40) and which has an arcuately curved section (34, 36) in the region of the separating device (40).

10. Computer program for visual quality control of textiles, which comprises program code that is executable by an electronic image evaluation system (60) for carrying out the method according to any of the preceding Claims 1 to 5.

## Revendications

1. Procédé de contrôle qualité visuel de vêtements de haute visibilité au moyen d'un système d'analyse d'image électronique (60), comprenant les étapes consistant à :
- acquérir au moins une image (100, 102) d'un vêtement (10),
- sélectionner au moins une zone partielle (112, 116, 120) du vêtement (10) acquis sur l'image (100, 102),
- évaluer au moins certains pixels dans la zone partielle sélectionnée (112, 116, 120) et déterminer une grandeur d'évaluation des pixels sur la base d'une luminosité des pixels,
- la sélection de ladite au moins une zone partielle (112, 116, 120) du vêtement acquis étant effectuée à l'aide d'une première image (100) du vêtement (10), et la sélection de ladite au moins une zone partielle (112, 116, 120) comprenant une détection de contours d'éléments réfléchissants (16, 20) du vêtement (10),
- et dans lequel l'évaluation d'au moins certains pixels dans la zone partielle sélectionnée (112, 116, 120) est effectuée à l'aide d'une deuxième image (102) du même vêtement (10),
- la première image (100) et la deuxième image (102) étant substantiellement coïncidentes et étant différente l'une de l'autre au niveau de la durée d'exposition, de la luminosité, de l'intensité et/ou du contraste,
- la première image (100) étant fortement exposée ou surexposée et la deuxième image (102) étant exposée normalement ou sous-exposée,
- comparer la grandeur d'évaluation avec une valeur seuil prédéfinie.

2. Procédé selon la revendication 1, dans lequel tous les pixels dans la zone partielle sélectionnée (112, 116, 120) sont évalués.

3. Procédé selon l'une quelconque des revendications précédentes, dans lequel la sélection de ladite au moins une zone partielle (112, 116, 120) comprend sur la base de la couleur une validation d'image de l'image acquise (100) .

4. Procédé selon l'une quelconque des revendications précédentes, dans lequel la première et la deuxième image (100, 102) sont acquises l'une après l'autre, ou dans lequel la deuxième image (102) est dérivée de la première image (100) par traitement d'image numérique.

5. Procédé selon l'une quelconque des revendications précédentes, dans lequel une séquence d'images (100, 102) d'un vêtement (10) en mouvement est acquise, et dans lequel pour certaines images ou pour chaque image (100, 102) de la séquence d'images :
a) une zone partielle (112, 116, 120) du vêtement acquis est sélectionnée sur l'image (100, 102),
b) au moins certains ou tous les pixels dans la zone partielle sélectionnée (112, 116, 120) sont évalués, dans lequel pour certains ou pour tous les pixels dans la zone partielle sélectionnée (112, 116, 120) une grandeur d'évaluation est déterminée sur la base de la luminosité des pixels,
et dans lequel la grandeur d'évaluation est formée sur la base de tous les pixels évalués de certaines ou de toutes les images (100, 102) de la séquence d'images.

6. Dispositif de contrôle qualité visuel de vêtements de haute visibilité, comprenant
- un dispositif de convoyage (30) servant à transporter un certain nombre de vêtements (10),
- un dispositif de séparation (40) servant à séparer au moins temporairement un vêtement (10) du nombre de vêtements,
- au moins une première caméra (50, 52) disposée dans la zone du dispositif de séparation (40), et
- un système d'analyse d'image électronique (60) qui est relié en transmission de signal à la caméra (50, 52), et qui est configuré pour exécuter le procédé selon l'une quelconque des revendications précédentes.

7. Dispositif selon la revendication 6, comprenant en outre une deuxième caméra (52) disposée dans la zone du dispositif de séparation (40), reliée en transmission de signal au système d'analyse d'image électronique (60), et qui est disposée à distance d'une première caméra (50), et dans lequel la première et la deuxième caméra (50, 52) sont disposées sur des côtés opposés de la position d'acquisition (42) et respectivement orientées vers la position d'acquisition (42).

8. Dispositif selon la revendication 6 ou 7, dans lequel au moins l'une de la première et de la deuxième caméra (50, 52) est disposée dans une enceinte (54) ou en affleurement avec une ouverture de passage (55, 56) de celle-ci.

9. Dispositif selon l'une quelconque des revendications précédentes 6 à 8, dans lequel le dispositif de convoyage (30) présente une voie de convoyage (32) qui s'étend à travers la zone du dispositif de séparation (40) et qui présente dans la zone du dispositif de séparation (40) une partie (34, 36) courbe en forme d'arc.

10. Programme informatique de contrôle qualité visuel d'articles textiles qui présente du code programme qui peut être exécuté par un système d'analyse d'image électronique (60) pour exécuter le procédé selon l'une quelconque des revendications précédentes 1 à 5.
